# EUROPÄISCHE PATENTANMELDUNG

(11) **EP 2 400 077 A2**
(43) Veröffentlichungstag der Anmeldung: **28.12.2011**
(21) Anmeldenummer: 11171501.7
(22) Anmeldetag: 27.06.2011
(51) Int. Cl.: E04F 19/04

(54) **Wandabschlussleiste mit integrierter Lichtquelle**

(30) Priorität: 28.06.2010 DE 202010007926 U
(71) Anmelder: Halemeier GmbH & Co. KG, 49326 Melle-Neuenkirchen (DE)
(72) Erfinder: Halemeier, Eckhard, 32120 Hiddenhausen (DE); Ott, Niko, 32052 Herford (DE)
(74) Vertreter: TER MEER - STEINMEISTER & PARTNER GbR

(57) **Zusammenfassung**

Wandabschlussleiste mit einer frontseitigen Wand, die ein lichtdurchlässiges Wandelement (24) aufweist, das wenigstens einen sich über die gesamte Länge der Front der Wandabschlussleiste erstreckenden Lichtabgabebereich (34) für die Abgabe von in das lichtdurchlässige Wandelement (24) eingekoppeltem Licht einer hinter der Front der Wandabschlussleiste angeordneten Lichtquelle (30) bildet.

## Beschreibung

Die Erfindung betrifft eine Wandabschlussleiste, insbesondere eine Sockelleiste, mit integrierter Lichtquelle.

Bei einer Wandabschlussleiste handelt es sich um Leiste zur Anordnung an einem Übergang zwischen einer Wand und einer horizontalen Fläche, beispielsweise einem Fußboden oder einer Decke. Es sind insbesondere Sockelleisten zur Anordnung an einem Übergang zwischen einer Wand und einem Fußboden bekannt.

Aus DE 202 11 438 U1 ist eine Fußleiste mit einem Beleuchtungselement bekannt, bei dem eine Platine mit mehreren Leuchtdioden bestückt ist. Die Leuchtdioden sind in Feldern angeordnet, die jeweils durch eine Blende gebildet werden, die mit kreisförmigen Öffnungen für die einzelnen Leuchtdioden versehen ist. In einem Fußleistenelement ist eine Öffnung ausgespart, die durch eine weitere Blende ausgefüllt wird, die Öffnungen für die mit den Leuchtdioden bestückten Felder aufweist.

Aufgabe der Erfindung ist es, eine neuartige Wandabschlussleiste, insbesondere Sockelleiste, für die Integration einer Lichtquelle zu schaffen, die einen besonderen ästhetischen Effekt ermöglicht.

Diese Aufgabe wird erfindungsgemäß gelöst durch eine Wandabschlussleiste mit einer frontseitigen Wand, die ein lichtdurchlässiges Wandelement aufweist, das wenigstens einen sich über die gesamte Länge der Front der Wandabschlussleiste erstreckenden Lichtabgabebereich für die Abgabe von in das lichtdurchlässige Wandelement eingekoppeltem Licht einer hinter der Front der Wandabschlussleiste angeordneten Lichtquelle bildet.

Die erfindungsgemäße Wandabschlussleiste hat insbesondere den Vorteil, dass sie durch das lichtdurchlässige Wandelement mit dem sich über die gesamte Länge der Front erstreckenden Lichtabgabebereich eine selbstleuchtende Wandabschlussleiste mit einer besonders eleganten und klaren ästhetischen Erscheinungsform bei zugleich einfachem Aufbau ermöglicht. Die Lichtquelle kann hinter der Front der Wandabschlussleiste angeordnet werden, so dass im Gegensatz zu in der Front freiliegenden Lichtquellen eine geschlossene Front ermöglicht wird.

Insbesondere kann die Wandabschlussleiste eine Sockelleiste sein.

Der Lichtabgabebereich ist vorzugsweise ein Streulichtabgabebereich für die Abgabe von in das lichtdurchlässige Wandelement eingekoppeltem und dann gestreutem Licht einer hinter der Front der Wandabschlussleiste angeordneten Lichtquelle. Eine Streuung von eingekoppeltem Licht kann beispielsweise, etwa im Falle eines transluzenten Wandelements, durch im Wandelement angeordnete Streukörper erfolgen. Weiter kann eine Streuung von Licht beispielsweise durch eine lichtstreuende Oberfläche des Wandelements im Bereich des Lichtabgabebereichs erfolgen, etwa durch eine Riffelung oder Aufrauung der Oberfläche.

Der Begriff "lichtdurchlässiges Wandelement" umfasst sowohl ein transluzentes als auch ein transparentes Wandelement. Während ein transluzentes Wandelement Licht streut, kann ein transparentes Wandelement auch als durchsichtig oder blickdurchlässig bezeichnet werden.

Vorteilhafte Ausgestaltungen der Erfindung ergeben sich aus den Unteransprüchen.

Vorzugsweise weist die Wandabschlussleiste wenigstens eine Lichtabschirmung auf, die in einem Lichtabschirmbereich frontseitig vor dem lichtdurchlässigen Wandelement angeordnet ist, insbesondere in einem Lichtabschirmbereich außerhalb des Lichtabgabebereichs. Der Lichtabschirmbereich kann somit einen Lichtaustritt aus dem lichtdurchlässigen Wandelement im Bereich der Lichtabschirmung vermindern oder verhindern. Dies ist besonders vorteilhaft, da sich somit das lichtdurchlässige Wandelement sowohl entlang des Lichtabgabebereichs als auch des Lichtabschirmbereichs erstrecken kann, wodurch der Aufbau der Wandabschlussleiste vereinfacht wird. Beispielsweise kann das Wandelement eine einheitliche Materialzusammensetzung aufweisen bzw. aus einem einheitlichen Material aufgebaut sein, beispielsweise einem transluzenten Material.

Beispielsweise erstreckt sich der Lichtabgabebereich nur über einen Höhenteilbereich der Front der Wandabschlussleiste, und der wenigstens eine Lichtabschirmbereich ist oberhalb und/oder unterhalb des Lichtabgabebereichs angeordnet.

Beispielsweise kann sich das lichtdurchlässige Wandelement im wesentlichen über die gesamte Höhe der Front der Wandabschlussleiste erstrecken.

In einer Ausführungsform umfasst die Wandabschlussleiste wenigstens eine integrierte Lichtquelle zum Einkoppeln von Licht in den lichtdurchlässigen Wandabschnitt, insbesondere eine elektrische Lichtquelle.

In einer bevorzugten Ausführungsform ist die wenigstens eine Lichtquelle gegenüber dem Lichtabgabebereich vertikal beabstandet und/oder hinter eine Lichtbarriere angeordnet. Beide Merkmale haben sowohl einzeln als auch in Kombination den Vorteil, dass sie eine besonders gleichmäßige Helligkeit des Lichtabgabebereichs ermöglichen. So wird beispielsweise im Falle eines transluzenten Wandelements vermieden, dass gleichmäßig aus dem Wandelement im Lichtabgabebereich austretendes Streulicht von örtlichen Helligkeitsmaxima am Ort der Lichtquellen überlagert wird.

Vorzugsweise wird das lichtdurchlässige Wandelement durch eine Profilleiste gebildet, besonders bevorzugt durch eine Profilleiste aus Kunststoff. Dies ermöglicht ein einfaches Zuschneiden der Wandabschlussleiste auf die benötigte Länge.

Vorzugsweise weist die Wandabschlussleiste ein sich im wesentlichen über die gesamte Länge der Wandabschlussleiste erstreckendes Halteelement zum Ausrichten eines die wenigstens eine Lichtquelle umfassenden flexiblen Lichtbandes auf. Dadurch kann eine über die gesamte Länge der Wandabschlussleiste möglichst gleichmäßige Lichteinkoppelung in das Wandelement ermöglicht werden. Bei dem Halteelement kann es sich beispielsweise um einen von einem frontseitigen oder rückseitigen Wandelement der Wandabschlussleiste vorstehenden Vorsprung oder Steg und/oder um ein Bett für das Lichtband handeln.

Ein bevorzugtes Ausführungsbeispiel der Erfindung wird im folgenden anhand der Zeichnung näher erläutert.

Es zeigen:
- Fig. 1: ein erstes Ausführungsbeispiel einer Wandabschlussleiste in Form einer Sockelleiste in einer Einbausituation; und
- Fig. 2: ein Halteelement eines zweiten Ausführungsbeispiels einer Wandabschlussleiste.

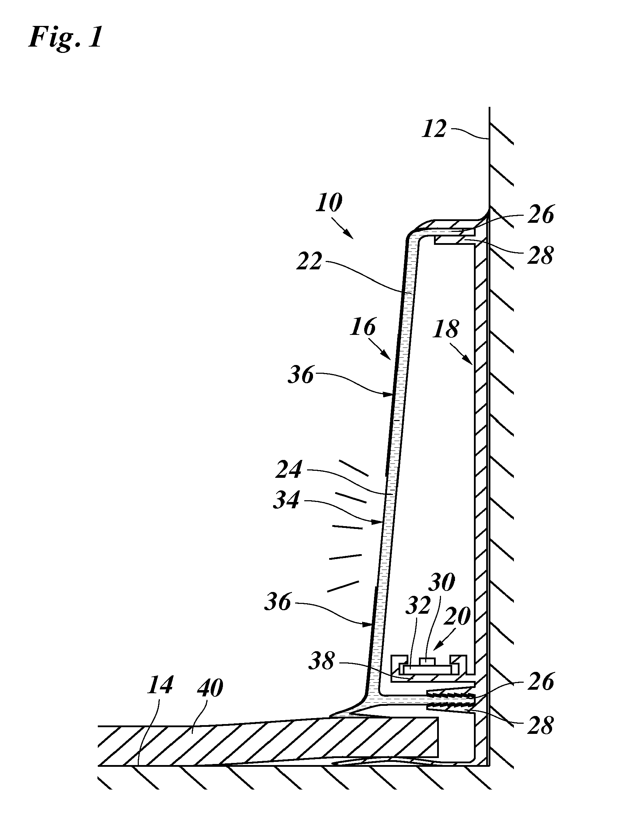

Fig. 1 zeigt ein Beispiel einer erfindungsgemäßen Sockelleiste 10 in einer Einbausituation an einem Übergang zwischen einer Gebäudewand 12 und einem Boden 14. Die Sockelleiste 10 umfasst eine vordere Profilleiste 16, eine hintere Profilleiste 18 und ein dazwischen angeordnetes Lichtband 20.

Die hintere Profilleiste 18 ist beispielsweise in Form eines Strangprofils aus Kunststoff hergestellt. Sie kann beispielsweise auf den Boden 14 aufgestellt werden. Die Profilleiste 18 ist beispielsweise ein Montageprofil zur Befestigung an der Gebäudewand 12, etwa mittels Verschrauben oder Verkleben.

Die vordere Profilleiste 16 umfasst beispielsweise ein Strangprofil 22 aus Kunststoff, welches ein sich im wesentlichen über die gesamte Höhe der Sockelleiste 10 erstreckendes Wandelement 24 bildet. Das Strangprofil 22 ist beispielsweise aus transluzentem Kunststoff hergestellt, beispielsweise eingefärbtem Polycarbonat (PC) oder Polymethylmethacrylat (PMMA).

Im gezeigten Beispiel ist die vordere Profilleiste 16 auf die hintere Profilleiste 18 aufsteckbar, etwa durch Einstecken wenigstens eines Steges in eine daran angepasste Aufnahme der jeweils anderen Profilleiste. Beispielsweise sind vertikal beabstandet zwei Stege 26 an der vorderen Profilleiste 16 ausgebildet, die in entsprechende Steckaufnahmen 28 der hinteren Profilleiste 18 einsteckbar sind. Vorzugsweise ist die vordere Profilleiste 16 mit der hinteren Profilleiste 18 verrastbar. Dazu kann beispielsweise wenigstens einer der Stege 26 als Harpunensteg ausgeführt sein.

Die Profilleisten 16, 18 bilden ein nach oben und vorne geschlossenes Gehäuse der Sockelleiste 10.

Das Lichtband 20 ist beispielsweise ein flexibles LED-Lichtband mit mehreren Leuchtdioden (LEDs) 30, die beispielsweise auf einer flexiblen Leiterplatte 32 angeordnet sind. Die LEDs 30 bilden integrierte Lichtquellen der Sockelleiste 10. Die LEDs 30 sind derart hinter dem Wandelement 24 angeordnet, dass Licht der LEDs 30 in das transluzente Wandelement 24 eingekoppelt werden kann. Bei einem geeigneten Aufbau kann das LED-Lichtband beispielsweise vor dem Einbringen in die Sockelleiste 10 auf die erforderliche Länge gekürzt werden.

Auf der Frontseite des Wandelements 24 bildet das Wandelement 24 wenigstens einen ersten Lichtabgabebereich 34, an der in das Wandelement 24 eingekoppeltes Licht zumindest teilweise in Form von Streulicht abgegeben werden kann. Oberhalb und unterhalb des Lichtabgabebereichs 34 sind beispielsweise Lichtabschirmungen 36 vorderseitig am Wandelement 24 angeordnet, so dass Lichtabschirmbereiche gebildet werden. Bei der Lichtabschirmung 36 kann es sich beispielsweise um eine Beschichtung des Wandelements 24 handeln, beispielsweise eine Beschichtung mit einer Folie und/oder mit einem Aufdruck. Die Lichtabstimmung 36 ist somit fest mit dem Wandelement 24 verbunden.

Beispielsweise erstrecken sich sowohl der Lichtabgabebereich 34 als auch die Lichtabschirmungen 36 jeweils über die gesamte Länge der Front der Sockelleiste 10. Sie bilden beispielsweise streifenförmige Bereiche. Im gezeigten Beispiel erstreckt sich der Lichtabgabebereich 34 flächig und streifenförmig entlang der Frontseite des Wandelements 24. Das transluzente Wandelement 24 erstreckt sich durchgehend und einteilig im Bereich des Lichtabgabebereichs 34 und der Lichtabschirmbereiche.

Vorzugsweise ist die wenigstens eine Lichtquelle relativ zu dem Lichtabgabebereich vertikal beabstandet und/oder hinter einer Lichtbarriere angeordnet, so dass allenfalls im wesentlichen außerhalb eines Winkelbereichs von 30° bis 60° zur Horizontalen, vorzugsweise 10° bis 75° zur Horizontalen, besonders bevorzugt 5° bis 80° zur Horizontalen, direkt durch das lichtdurchlässige Wandelement durchscheinendes Licht der Lichtquelle im Lichtabgabebereich austritt. Im gezeigten Beispiel sind die LEDs 30 relativ zu dem Lichtabgabebereich 34 vertikal beabstandet angeordnet. Das Wandelement 24 ist dazu eingerichtet, eingekoppeltes Licht der LEDs 30 zu dem Lichtabgabebereich 34 zu transportieren. Es ergibt sich ein besonders gleichmäßig leuchtender Lichtabgabebereich 34.

Das Lichtband 20 ist an einem Halteelement 38 in Form eines von der hinteren Profilleiste 18 vorstehenden Vorsprunges ausgerichtet. Es kann beispielsweise auf dem Halteelement 38 aufliegen und/oder an dem Halteelement 38 anhaften, etwa durch ein doppelseitiges Klebeband. Im gezeigten Beispiel bildet das Halteelement 38 eine Einfassung mit einem Bett und randseitigen Haltestegen für das Lichtband 20.

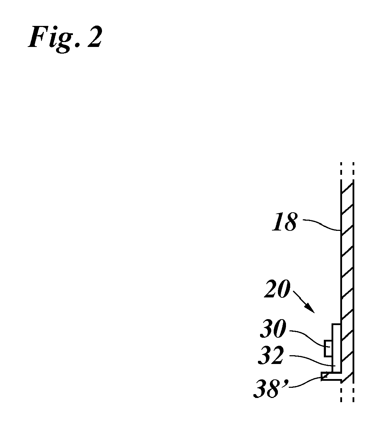

Fig. 2 zeigt ein anderes Beispiel eines Halteelements 38', an dem wiederum das Lichtband 20 ausgerichtet ist. Das Halteelement 38' wird durch einen Steg oder Vorsprung an der Profilleiste 18 gebildet. Das Lichtband 20 liegt beispielsweise mit einer Kante an dem Halteelement 38' an und haftet mit einer Bodenfläche des Lichtbands 20 an der hinteren Profilleiste 18.

Bei dem in Fig. 1 gezeigten Beispiel ist außerdem im unteren Bereich der Sockelleiste 10 eine vorderseitige Aufnahme, beispielsweise in Form einer Halteklammer, für einen Fußbodenbelag 40 gebildet, der mit seinem Rand in die Aufnahme eingesteckt werden kann.

Es versteht sich, dass die obigen Beispiele beliebig variiert werden können. So kann beispielsweise die Sockelleiste 10 als einteilige Profilleiste ausgebildet sein, beispielsweise als Strangprofil aus Kunststoff, welches mit der Lichtabschirmung versehen ist.

Weiter kann beispielsweise die Sockelleiste 10 ohne eine Steckaufnahme für einen Fußbodenbelag gebildet sein.

Weiter kann beispielsweise die wenigstens eine Lichtquelle auch oberhalb des Lichtabgabebereichs 34 angeordnet sein.

Weiter kann beispielsweise das Halteelement 38 oder 38' an der vorderen Profilleiste 16, beispielsweise am Wandelement 24 gebildet sein. Ggf. kann ein Lichtband 20 auch einfach im Bereich hinter der Front der Sockelleiste 10 abgelegt oder unmittelbar an der Gebäudewand 12 angeordnet werden, etwa wenn beispielsweise die Sockelleiste 10 keine Rückwand aufweist.

## Patentansprüche

1. Wandabschlussleiste mit einer frontseitigen Wand, die ein lichtdurchlässiges Wandelement (24) aufweist, das wenigstens einen sich über die gesamte Länge der Front der Wandabschlussleiste erstreckenden Lichtabgabebereich (34) für die Abgabe von in das lichtdurchlässige Wandelement (24) eingekoppeltem Licht einer hinter der Front der Wandabschlussleiste angeordneten Lichtquelle (30) bildet.

2. Wandabschlussleiste nach Anspruch 1, mit wenigstens einer Lichtabschirmung (36), die in einem Lichtabschirmbereich frontseitig vor dem lichtdurchlässigen Wandelement (24) angeordnet ist.

3. Wandabschlussleiste nach Anspruch 2, bei der das lichtdurchlässige Wandelement (24) in dem Lichtabschirmbereich mit der Lichtabschirmung (36) beschichtet ist.

4. Wandabschlussleiste nach Anspruch 2 oder 3, bei der die Lichtabschirmung (36) wenigstens eines von einer Beschichtung, einer Folie und einem Aufdruck umfasst.

5. Wandabschlussleiste nach einem der vorstehenden Ansprüche, bei dem das lichtdurchlässige Wandelement (24) ein transluzentes Wandelement ist.

6. Wandabschlussleiste nach einem der vorstehenden Ansprüche, mit wenigstens einer integrierten Lichtquelle (30) zum Einkoppeln von Licht in den lichtdurchlässigen Wandabschnitt (24).

7. Wandabschlussleiste nach einem der vorstehenden Ansprüche, bei der die wenigstens eine Lichtquelle (30) relativ zu dem Lichtabgabebereich (34) vertikal beabstandet ist.

8. Wandabschlussleiste nach einem der vorstehenden Ansprüche, bei der das lichtdurchlässige Wandelement (24) durch eine Profilleiste gebildet wird.

9. Wandabschlussleiste nach einem der vorstehenden Ansprüche, mit einem sich im wesentlichen über die gesamte Länge der Wandabschlussleiste erstreckenden Halteelement (38) zum Ausrichten eines die wenigstens eine Lichtquelle (30) umfassenden flexiblen Lichtbandes (20).

10. Wandabschlussleiste nach einem der vorstehenden Ansprüche, bei dem das lichtdurchlässige Wandelement (24) im wesentlichen aus eingefärbtem Kunststoff besteht.
